# EUROPÄISCHE PATENTANMELDUNG

(11) **EP 1 384 955 A1**
(43) Veröffentlichungstag der Anmeldung: **28.01.2004**
(21) Anmeldenummer: 02016629.4
(22) Anmeldetag: 25.07.2002
(51) Int. Cl.: F24D 3/16

(54) **Rohrleitungs- und Verlegesystem, insbesondere für Warmwasser-Fussbodenheizungen**

(71) Anmelder: Petermann, Marcus, 24966 Sörup (DE)
(72) Erfinder: Petermann, Marcus, 24966 Sörup (DE)
(74) Vertreter: Richter, Werdermann, Gerbaulet & Hofmann

(57) **Zusammenfassung**

Die Erfindung betrifft ein Rohrleitungs- und Verlegesystem (100) für ein Flächenheiz- und/oder Kühlsystem, insbesondere für eine Warmwasser-Fußbodenheizung, das wenigstens eine Verlegeplatte (10) umfasst, an der ein Heiz- und/oder Kühlmedium führendes Rohrelement (16) angeordnet ist.

Dadurch, dass die wenigstens eine Verlegeplatte (10ₙ) und das mindestens eine Rohrelement (16) eine vorgefertigte, insbesondere flexible Einheit bilden, wird ein verlege- und einbaufertiges Fußbodenheizungselement für das Rohrleitungs- und Verlegesystem (100) zur Verfügung gestellt, mittels dem ein Nichtfachmann die Verlegung einer Fußbodenheizung selbst vornehmen kann.

## Beschreibung

Die Erfindung betrifft ein Rohrleitungs- und Verlegesystem zum Verlegen von Rohren für ein Flächenheiz- und/oder Kühlsystem, insbesondere für Warmwasser-Fußbodenheizungen, mit den im Oberbegriff des unabhängigen Anspruchs 1 und des unabhängigen Anspruchs 18 genannten Merkmalen.

Flächenheizungen sind mit ein Medium, im Allgemeinen warmes Wasser, führenden Rohren versehen, die auf einem Wärmedämmungsuntergrund verlegt werden. Diese Verlegesysteme weisen Wärmedämmplatten auf, auf denen die das Medium führende Rohre befestigt werden. Zur Befestigung dienen Halteclipse, sofern die Oberseiten der Verlegeplatten eben und vorsprungslos sind. Als Alternative zu den Clips- beziehungsweise Tuckersystemen sind Verlegesysteme bekannt, deren Verlegeplatten an ihren Oberseiten Halteelemente zum klemmenden Halten der Rohre aufweisen. Die Anordnung der Halteelemente ist derart, dass zwischen ihnen die Rohre mindestens entlang einer ersten und einer zweiten Rohrverlegelinie verlegt werden können. Dabei verlaufen diese beiden Rohrverlegelinien winklig, insbesondere rechtwinklig zueinander. Die Halteelemente sind beidseitig dieser beiden Rohrverlegelinien angeordnet. Eine derartige Verlegeplatte ist beispielsweise in DE 37 30 144 C2 beschrieben.

Ein mit ähnlichen Verlegeplatten bekanntes Velegesystem zum Verlegen von Rohren für Flächenheizungen, insbesondere Fußbodenheizungen, ist aus der DE 199 12 998 bekannt. Dieses Verlegesystem weist erste Verlegeplatten mit einer Vielzahl von auf ihren Oberseiten angeordneten Halteelementen zum Halten von entlang zumindest einer ersten und einer zweiten Rohrverlegelinie der zur verlegenden Rohre auf, wobei die erste Rohrverlegelinie und die zweite Rohrverlegelinie jeweils parallel zueinander verlaufen und die erste Rohrverlegelinie winklig, insbesondere rechtwinklig, zu der zweiten Rohrverlegelinie verläuft und die Halteelemente beidseitig jeder zweiten und ersten Rohrverlegelinie angeordnet sind.

Aus der DE 296 99 497 ist ferner ein Verlegesystem für Fußbodenheizungsrohre bekannt.

Dieses Verlegesystem für Fußbodenheizungsrohre besteht aus genoppten rechteckigen Trägerelementen, die aus einer Dämmschicht aus aufgeschäumtem Kunststoff, vorzugsweise Polystyrol, und einer tiefgezogenen Verlegefolie aus Kunststoff, vorzugsweise Polystyrol, bestehen und Noppen zum Halten der Heizungsrohre.

Zudem sind Randstreifen ausgebildet, die aus einer an der Wand anliegenden Dämmschicht aus aufgeschäumtem Kunststoff, vorzugsweise aus Polyethylen, und einer Übergangsfolie aus Kunststoff, vorzugsweise Polyethylen, bestehen.

Das Verlegesystem ist so ausgeführt, dass die Dämmschicht und die tiefgezogene Verlegefolie mit ihren Noppen lösbar ineinander steckbar sind. Dabei steht die Verlegefolie mit einer Noppenreihe an zwei aneinander stoßenden Kanten über die Dämmschicht über. Die Noppen der Verlegefolie an den beiden anderen Kanten, an denen sie nicht überstehen, weisen einen etwas geringeren Querschnitt auf, so dass diese Noppen in die anderen Noppen steckbar sind, so dass die Noppen der Verlegefolie, die nicht den geringeren Querschnitt aufweisen, derart elastisch sind, dass sie ineinander drückbar sind.

Nachteilig ist jedoch, dass die bekannten Verlegesysteme so kompliziert sind, dass die Verlegung nur von einem Fachmann ausgeführt werden kann. Das hängt vor allem damit zusammen, dass die Verlegesysteme aus Einzelkomponenten bestehen, die von einem Fachmann zu einer fertigen Fußbodenheizung zusammengefügt werden müssen. Zudem bedarf es einer je nach den Randbedingungen erforderlichen Wärmebedarfsberechung für Räume, in denen eine Fußbodenheizung installiert werden soll, die für einen Nichtfachmann schwer auszuführen ist. Die Montage von Fußbodenheizungen selbst ist vor allem durch die erforderliche Montageleistung von ausführenden Fachfirmen sehr teuer.

Wünschenswert wäre eine Möglichkeit der Installation einer Fußbodenheizung unter notwendiger fachmännischer Betreuung bezüglich der Wärmebedarfsberechnung mit einem Rohrleitungs- und Verlegesystem, welches ähnlich wie Parkettfußböden oder Bausätze für Heizungssysteme zur Selbstmontage in einem Baumarkt oder dergleichen bezogen werden kann.

Es ist deshalb die Aufgabe der vorliegenden Erfindung, ein Rohrleitungsund Verlegesystem anzubieten, bei dem die oben genannten Nachteile überwunden werden und durch das eine einfache und schnelle Wärmebedarfsberechnung anhand von durch den Nichtfachmann aufnehmbaren Angaben möglich ist und mittels dem ein, an die jeweiligen Randbedingungen angepasstes Rohrleitungs- und Verlegesystem auslegbar und bestellbar ist, welches vor allem bereits so verlege- und einbaufertig ist, dass ein Nichtfachmann mit einer Gebrauchsanweisung eine Verlegung selbst vornehmen kann.

Diese Aufgabe wird gemäß der Lehre der vorliegenden Erfindung durch ein Rohrleitungs- und Verlegesystem mit den im Anspruch 1 genannten Merkmalen gelöst.

Das erfindungsgemäße Rohrleitungs- und Verlegungssystem mit den in Anspruch 1 genannten Merkmalen bietet den Vorteil, dass dadurch, dass mindestens eine Verlegeplatte und mindestens ein Rohrelement eine vorgefertigte, insbesondere flexible Einheit bilden, ein verlege- und einbaufertiges Fußbodenheizungselement zur Verfügung gestellt wird, mittels dem ein Nichtfachmann die Verlegung einer Fußbodenheizung selbst vornehmen kann, wobei die gebildete Einheit bevorzugterweise im Nichtgebrauchszustand zu einer Verkaufs- und Transportrolle zusammenlegbar ist.

Zudem bietet das erfindungsgemäße Verfahren mit den im Anspruch 18 genannten Merkmalen zur Auslegung und Herstellung eines Flächenheizund/oder Kühlsystems, insbesondere für eine Warmwasser-Fußbodenheizung, mittels eines Rohrleitungs- und Verlegesystems, insbesondere für den Direktbezug des Rohrleitungs- und Verlegesystems aus einem Baumarkt oder dergleichen, den Vorteil, dass durch eine einfache Angabenerfassung von Daten, die für eine Wärmebedarfsberechnung eines Raumes mit einer bestimmten Größe benötigt werden, zur Auslegung des Rohrleitungs- und Verlegesystems eine Übertragung der Ergebnisse der Wärmebedarfsberechnung auf das Rohrleitungs- und Verlegesystem vorgenommen wird und eine Aufteilung einer benötigten Heizfläche auf die Größe des bestimmten Raumes auf mindestens eine Verlegeplatte oder mindestens eine Verlegebahn vorgenommen wird und eine Anfertigung, Verpackung, Versendung und Abholung der mindestens einen Verlegeplatte oder der mindestens einen Verlegebahn erfolgt, wonach anschließend durch einen Nichtfachmann eine Verlegung selbstständig durchgeführt werden kann. Hinzukommt, dass Verteiler, d. h. Regeleinheiten, und zwar voreingestellt für den hydraulischen Abgleich, für den hydraulichen Abgleich mitgeliefert werden. Das Rohrleitungs- und Verlegesystem kann mit oder ohne Regeleinheit geliefert werden. Neben handbetätigbaren Ventilen können auch automatische Regeleinheiten eingesetzt werden, zumal Vor- und Rücklauf zu erfassen sind.

Vorteilhafte Ausführungsformen und zweckmäßige Weiterbildungen des Rohrleitungs- und Verlegesystems sind in den Unteransprüchen gekennzeichnet.

In bevorzugter Ausgestaltung der Erfindung weist die mindestens eine Verlegeplatte eine erste Schicht mit einem auf der ersten Schicht angeordneten Trägermaterial auf, auf dem mindestens ein Rohrelement befestigt ist. Erfindungsgemäß sind die erste Schicht, das Trägermaterial und die Rohrelemente besonders dadurch gekennzeichnet, dass sie aus flexiblen Materialien bestehen.

In bevorzugter Ausgestaltung der Erfindung sind mindestens eine erste und eine zweite Verlegeplatte zu einer Verlegebahn miteinander verbunden.

Zur Verbindung der ersten und zweiten Verlegeplatten zu Verlegebahnen dient mindestens ein erstes Verbindungselement, welches in der Art eines ebenfalls flexiblen Steges ausbildbar ist.

Ferner bevorzugt ist, dass die mindestens eine Verlegeplatte oder mindestens eine Verlegebahn zusammenrollbar beziehungsweise zusammenklappbar oder zusammenlegbar ist.

Die erste Schicht einer Verlegeplatte beziehungsweise einer Verlegebahn ist eine Dämmschicht, die vorzugsweise aus aufgeschäumtem Kunststoff oder dergleichen besteht. Das Trägermaterial ist eine Kunststofffolie oder dergleichen und zudem bestehen die Rohrelemente ebenfalls aus Kunststoff, die in einer bestimmten Befestigungsart mit dem Trägermaterial verbunden sind.

Als Befestigungsart dient erfindungsgemäß eine Verklebung, eine Verschweißung oder eine mechanische Befestigung der Rohrelemente mit dem Trägermaterial. Die mechanische Befestigung kann auch so erfolgen, dass die Rohrelemente, sowohl nur im Trägermaterial als auch in der im Trägermaterial und der ersten Schicht, verankert sind.

In weiterer bevorzugter Ausgestaltung der Erfindung sind selbstverständlich die Verlegeplatten zur Herstellung von Verlegebahnen nicht nur mir flexiblen Stegen miteinander verbunden, sondern über weitere zweite Verbindungselemente über Kupplungen und/oder Steckverbindungen oder dergleichen an einem Vorlauf und einem Rücklauf der Rohrelemente miteinander verbunden.

Weitere bevorzugte Ausgestaltungen der Erfindung ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:
- Fig. 1: eine schematische Ansicht einer Verlegeplatte,
- Fig. 2: eine schematische Ansicht von zwei Verlegeplatten zur Bildung einer Verlegebahn,
- Fig. 3: eine schematische Ansicht einer Verlegebahn,
- Fig. 4: einen Schnitt A-A durch eine verlegte Fußbodenheizung an einem Rohrelement,
- Fig. 5: ein Blockschaltbild des Verfahrens zur Auslegung und Herstellung einer Fußbodenheizung und
- Fig. 6: eine schematische Ansicht einer aus drei Modulen bestehenden Verlegebahn.

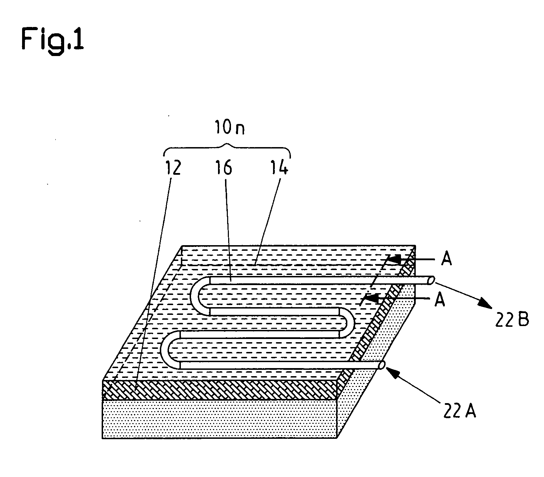

Fig. 1 zeigt eine erfindungsgemäße Verlegeplatte 10ₙ, die aus einer ersten Schicht 12 mit einem auf der ersten Schicht 12 angeordneten Trägermaterial 14, auf dem mindestens ein Rohrelement bzw. Rohrleitung 16 angeordnet ist, die vom Wärme abgebenden Medium durchströmt wird.

Das mindestens eine Rohrelement 16 weist einen Vorlauf 22A und einen Rücklauf 22B auf. Die Verlegeplatte 10ₙ kann beispielsweise derart normiert sein, dass einer Fläche der Verlegeplatte 10ₙ eine bestimmte Heizleistung zugeordnet werden kann. Ferner zeigt Fig. 1, dass die Verlegeplatte 10ₙ auf einem Fundament 30 aufbringbar ist.

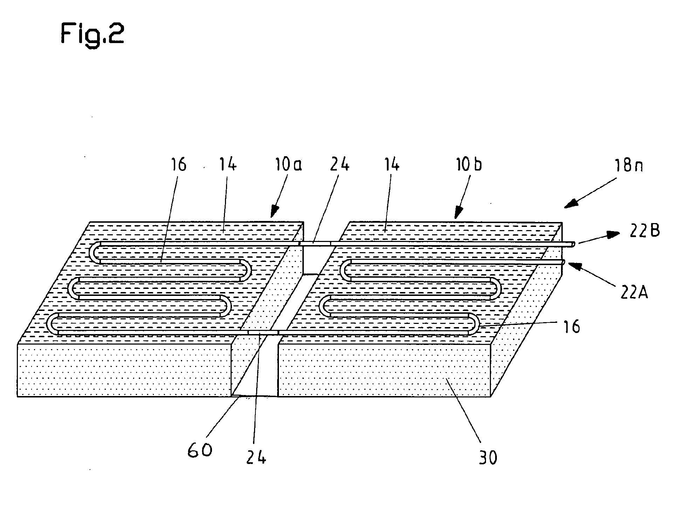

Fig. 2 zeigt eine erste Verlegeplatte 10ₐ und eine zweite Verlegeplatte 10_{b} in einer Vorstufe zur Bildung einer Verlegebahn 18ₙ. Auf die Darstellung der ersten Schicht 12 wurde aus Übersichtlichkeitsgründen verzichtet. Auf jeder Verlegeplatte 10ₐ und 10_{b} ist jeweils mindestens ein Rohrelement 16 auf dem Trägermaterial 14 angeordnet. Die Verlegeplatten 10ₐ und 10_{b} werden durch zweite Verbindungselemente 24 miteinander verbunden. Diese zweiten Verbindungselemente 24 können Kupplungen, Steckverbindungen oder dergleichen sein. Durch die Verbindung der Verlegeplatten 10ₐ und 10_{b} bilden sich an der Verlegeplatte 10_{b} entsprechend wiederum der Vorlauf 22A beziehungsweise der Rücklauf 22B aus. Beide Verlegeplatten 10ₐ und 10_{b} können über einen flexiblen Steg 60 miteinander verbunden sein. Jedoch auch andere Verbindungsmittel, z. B. Steckverbindungen können eingesetzt werden.

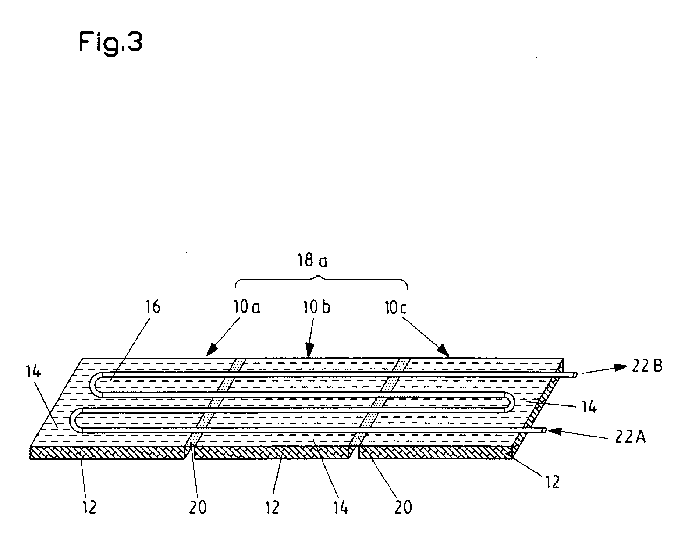

Fig. 3 zeigt die schematische Ansicht einer Verlegebahn 18ₐ, bestehend aus einzelnen ersten, zweiten und dritten Verlegeplatten 10ₐ, 10_{b} und 10_{c}. Fig. 3 zeigt den erfindungsgemäßen Gedanken, dass eine erste Verlegebahn 18ₐ nicht in jedem Fall aus Rohrelementen 16 der Verlegeplatte 10ₐ und der Verlegeplatte 10_{b} über zweite Verbindungselemente 24 ausgebildet ist, sondern dass ein Rohrelement 16 auf der ersten, zweiten und dritten Verlegeplatte 10ₐ, 10_{b} und 10_{c} angeordnet ist, ohne dass zweite Verbindungselemente 24 benötigt werden. Jede Verlegeplatte 10ₐ, 10_{b} und 10_{c} besteht dabei wiederum aus der ersten Schicht 12, dem Trägermaterial 14, wobei die erste und zweite Verlegeplatte 10ₐ und 10_{b} sowie die zweite und dritte Verlegeplatte 10_{b} und 10_{c} über jeweils ein erstes Verbindungselement 20, einen flexiblen Steg, verbunden sind. An der Verlegeplatte 10_{c} sind entsprechend zum Anschluss von weiteren Verlegebahnen 18ₙ beziehungsweise Verlegeplatten 10ₙ Vorlauf 22A und Rücklauf 22B ausgebildet.

Erfindungsgemäß kann eine Verlegebahn 18ₐ auch aus drei Verlegeplatten 10ₐ, 10_{b} und 10_{c} ausgebildet sein, indem drei Verlegeplatten mit jeweils einem Rohrelement 16 miteinander über die zweiten Verbindungselemente 24 - wie Fig. 2 zeigt - im Bereich der ersten Verbindungselemente 20 verbunden sind.

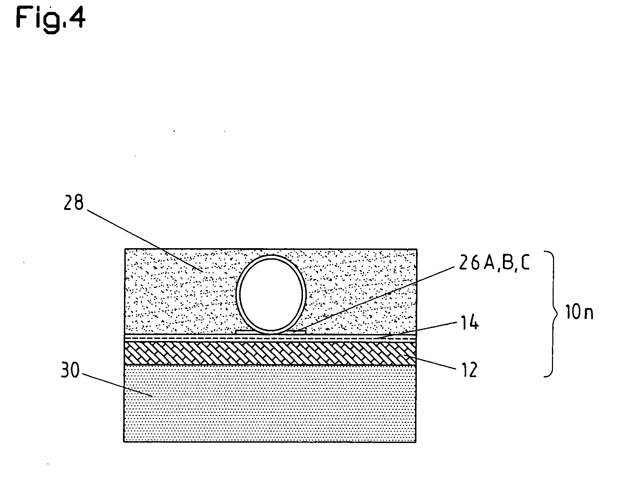

Fig. 4 zeigt die schematische Darstellung des Schnittes durch eine verlegte Fußbodenheizung im Schnitt A-A entsprechend der Fig. 1.

Die Verlegeplatte 10ₙ ist dabei auf ein Fundament 30 aufbringbar, so dass die erste Schicht 12, vorzugsweise eine Dämmschicht, aus aufgeschäumtem Kunststoff auf dem Fundament 30 angeordnet ist. Auf der Dämmschicht, der ersten Schicht 12, ist das Trägermaterial 14, vorzugsweise eine Kunststofffolie, angeordnet. Mit der Kunststofffolie, dem Trägermaterial 14, wird das Rohrelement 16 mittels mindestens einer Befestigungsart 26 verbunden.

Fig. 4 zeigt Befestigungsarten 26, bei denen das Rohrelement 16 mit dem Trägermaterial 14 durch eine Verklebung 26A oder eine Verschweißung 26B verbunden ist und eine weitere Befestigungsart 26, bei der das Rohrelement 16 mit dem Trägermaterial 14, der Kunststofffolie und/oder mit dem Trägermaterial 14, der Kunststofffolie oder der ersten Schicht 12, der Dämmschicht, durch eine mechanische Befestigung 26C angebracht ist.

Nach erfolgter Verlegung ist die mindestens eine Verlegeplatte 10ₙ beziehungsweise die Verlegebahn 18ₙ mit einem Estrich 28 abdeckbar.

Grundsätzlich ermöglicht das Rohrleitungs- und Verlegesystem 100 dem Nichtfachmann, die Fußbodenheizung selbst zu verlegen, indem dem Nichtfachmann Verlegeplatten 10ₙ oder Verlegebahnen 18ₙ zur Verfügung gestellt werden, die von ihm nach dem Erwerb, insbesondere im Fachhandel oder im Baumarkt, direkt auf das Fundament 30, vorzugsweise eine Betondecke oder ein geeigneter Untergrund, verlegt werden können. Anschließend erfolgt das Auffüllen mit dem Estrich 28.

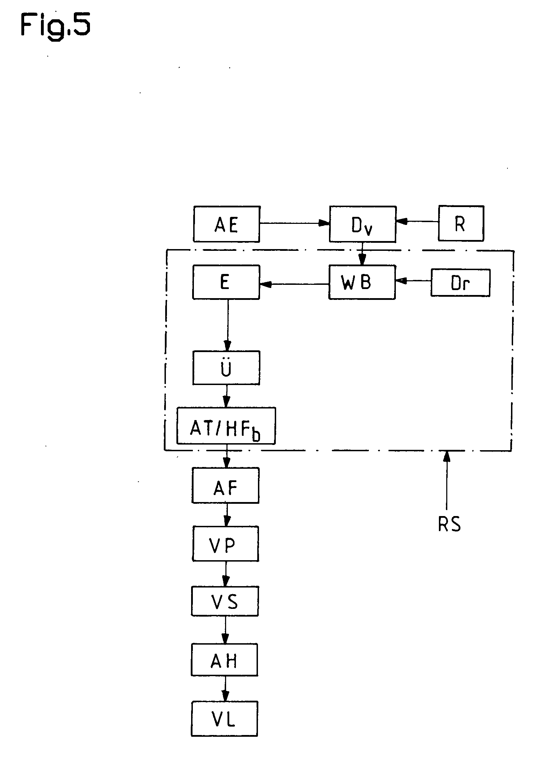

Fig. 5 zeigt ein Blockschaltbild des erfindungsgemäßen Verfahrens zur Auslegung und Herstellung der Fußbodenheizung. Die erfindungsgemäße Vorgehensweise des Verfahrens anhand des Blockschaltbildes ist die, dass zunächst vom Bauherrn oder dem Errichter der Fußbodenheizung eine Angabenerfassung AE von Daten D erfolgt, die für eine Wärmebedarfsberechnung WB eines Raumes R mit einer bestimmten Größe benötigt werden. Diese Daten D umfassen alle Werte, die zur Errechnung des Wärmebedarfs erforderlich sind. Die normierten, für eine Wärmebedarfsberechnung WB erforderlichen Daten sind zudem aus dem Stand der Technik bekannt und sind einschlägiger Fachliteratur entnehmbar.

Grundsätzlich können die erforderlichen Daten D in variable Daten Dᵥ und fixe Daten D_{f} unterteilt werden. Vorzugsweise werden alle Daten in einem Formblatt zusammengefasst, wobei diese Daten seitens des Bauherrn geliefert werden.

Zu den fixen Daten D_{f} gehören alle naturwissenschaftliche Konstanten und Größen, die einer Wärmebedarfsberechnung zugrunde zu legen sind.

Zu den variablen Daten gehören die spezifischen Gegebenheiten eines Raumes R, wie beispielsweise Raumgröße, Mauerwerksart, Fensteranzahl und Fenstergröße, Fensterglas (Normalglas, Isolierglas, Einfachfenster, Doppelfenster), Raumhöhe und Bodenabmessungen. Diese Aufzählung von variablen Daten ist beispielhaft und hat an dieser Stelle keinen Anspruch auf Vollständigkeit, sondern dient lediglich der Verdeutlichung der Vorgehensweise des erfindungsgemäßen Verfahrens. Hier kann auf entsprechende technische Vorschriften verwiesen werden.

In der Praxis wird der Anlagenerrichter im Vorfeld die Daten Dᵥ ermitteln und an die Herstellerfirma übersenden, die dazu beispielsweise ein Datenblatt mit allen relevanten für die Wärmebedarfsberechnung notwendigen Daten Dᵥ erstellt, die vom Anlagenerrichter zu ermitteln und anzugeben sind.

In einem nächsten Schritt erfolgt die eigentliche Wärmebedarfsberechnung WB beim Hersteller des Rohrleitungs- und Verlegesystems 100 und es folgt eine Übertragung Ü der Ergebnisse E auf das Rohrleitungs- und Verlegesystem 100 zu dessen Auslegung. Es erfolgt anschließend eine Aufteilung AT der errechneten benötigten Heizfläche HF_{b} unter Berücksichtigung der Fläche des Raumes R auf mindestens eine Verlegeplatte 10ₙ oder mindestens eine Verlegebahn 18ₙ.

In einem nächsten Schritt erfolgt eine Anfertigung AF (Herstellung) der mindestens einen Verlegeplatte 10ₙ und/oder der wenigstens einen Verlegebahn 18ₙ entsprechend der Aufteilung AT und eine Verpackung VP der mindestens einen Verlegeplatte 10ₙ und/oder der mindestens einen Verlegebahn 18ₙ. Die Verpackung VP kann dabei in besonders einfacher Weise erfolgen, da die mindestens eine Verlegeplatte 10ₙ und/oder die mindestens eine Verlegebahn 18ₙ, dadurch das die erste Schicht 12, das Trägermaterial 14 und die Rohrelemente 16 aus flexiblen Materialien bestehen und die einzelnen Verlegeplatten 10ₙ mittels erster flexibler Verbindungselemente 20 miteinander verbunden sind, aufrollbar und/oder zusammenklappbar und/oder zusammenlegbar sind.

Anschließend erfolgt eine Versendung VS an den Fachhandel oder einen Baumarkt und eine Abholung AH durch den Bauherrn beziehungsweise Installateur, der eine Verlegung VL der Verlegeplatten 10ₙ beziehungsweise der Verlegebahn 18ₙ durchführt. Die Versendung VS ist ebenfalls direkt an den Bauherrn denkbar. Die Verlegung kann auch durch den Hersteller oder auch durch Subunternehmer vorgenommen werden. Es folgt der Vertrieb des Rohrleitungs- und Verlegesystems z. B. durch den Baumarkt, dann erhält der Baumarkt das fertige System. Für den Hersteller des Systems ist es wichtig, alle Daten vom Bauherrn zu erhalten. Dafür steht dem Bauherrn ein entsprechend gestaltetes Formblatt zur Verfügung, in das der Bauherr alle erforderlichen Daten einträgt, die für die Herstellung des Systems erforderlich sind, z. B. für die Wärmebedarfsberechnung, wie Angaben zu Raumgrößen, Mauerwerksart, Fensteranzahl und -größe, Fensterglas (Normalglas, Isolierglas, Einfach-, Doppelfenster), Raumhöhe, Bodenabmessungen. Dazu zählt dann für die Ausführung des Systems auch die Aufteilung der gesamten Heizfläche in einzelne, der Raumgröße entsprechenden, rollbaren Bahnen mit Heizungsrohren.

Fig. 5 zeigt ferner, dass die Wärmebedarfsberechnung WB nach Aufnahme der variablen Daten Dᵥ der Angabenerfassung AE durch ein rechnergestütztes System RS ausgeführt werden kann. In dem rechnergestützten System RS sind bereits die fixen Daten D_{f} abgelegt. Innerhalb des rechnergestützten Systems RS werden ferner die Ergebnisse E der Wärmebedarfsberechnung WB ermittelt und es erfolgt die rechnerische Übertragung Ü auf das Rohrleitungs- und Verlegesystem 100 unter Aufteilung AT der benötigten Heizflächen HF_{b}, wodurch die Größe der mindestens einen Verlegeplatte 10ₙ oder der mindestens einen Verlegebahn 18ₐ für die Anfertigung AT vorbestimmt wird.

Das Rohrleitungs- und Verlegesystem 100 und das Verfahren zur Auslegung und Herstellung des Rohrleitungs- und Verlegesystems 100 sind unabhängig von der Anordnung der Rohrelemente 16 auf der ersten Schicht 12 und dem Trägermaterial 14. Die Anordnung kann sowohl in Quer- als auch in Längsrichtung, gegebenenfalls auch diagonal erfolgen.

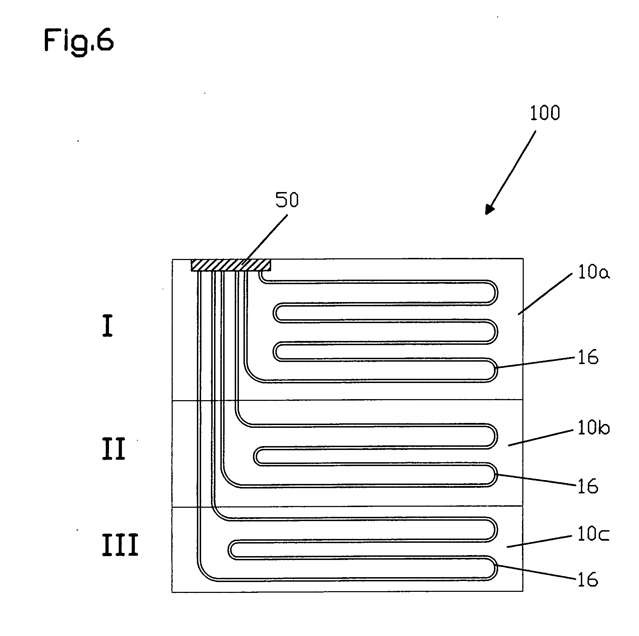

Fig. 6 zeigt eine Ausführungsform eines Verlegesystems, welches z. B. aus drei Modulen l, II, III besteht, wobei jedes Modul als erfindungsgemäße Verlegeplatte 10ₙ ausgebildet ist. Jedes Modul I, II, III weist Rohrelemente 16 mit Vor- und Rücklauf auf, wobei letztlich alle Module in einem Verteiler 50 zusammengeführt sind. Alle drei Module bilden dann die Verlegebahn.

Das Verlegesystem umfasst noch weitere Leistungen, wie Vorlaufregelung, Temperaturregelung, Montage bei zur Estricheinbringung einschließlich aller Serviceleistungen. Die drei Module I, II, III können in einer Bahn zusammengefasst sein. Die Rohrelemente 16 der einzelnen Module sind dann miteinander verbunden. Jedes Modul kann auch als einzelne Verlegebahn ausgebildet sein, wobei dann die Rohrelemente 16 der einzelnen Module miteinander verbunden werden. Alle Rohrelemente 16 sind in dem Verteiler 50 zusammengeführt.

### Bezugszeichenliste

- 100: Rohrleitungs- und Verlegesystem
- 10ₙ: Verlegeplatten
- 10ₐ: erste Verlegeplatte
- 10_{b}: zweite Verlegeplatte
- 10_{c}: dritte Verlegeplatte
- 12: erste Schicht
- 14: Trägermaterial
- 16: Rohrelemente
- 18ₙ: Verlegebahnen
- 18ₐ: erste Verlegebahn
- 20: erstes Verbindungselement / flexibler Steg
- 22A: Vorlauf
- 22B: Rücklauf
- 24: zweites Verbindungselement / Kupplungen/ Steckverbindungen
- 26: Befestigungsart
- 26A: Verklebung
- 26B: Verschweißung
- 26C: mechanische Befestigung
- 28: Estrich
- 30: Fundament
- AE: Angabenerfassung
- D: Daten
- D_{f}: fixe Daten
- Dᵥ: variable Daten
- WB: Wärmebedarfsberechnung
- R: Raum
- Ü: Übertragung
- E: Ergebnisse
- AT: Aufteilung
- HF_{b}: benötigte Heizfläche
- AF: Anfertigung
- VP: Verpackung
- VS: Versendung
- AH: Abholung
- VL: Verlegung
- RS: rechnergestütztes System

## Patentansprüche

1. Rohrleitungs- und Verlegesystem (100) für ein Flächenheizund/oder Kühlsystem, insbesondere für eine Warmwasser-Fußbodenheizung, das wenigstens eine Verlegeplatte (10) umfasst, an der ein Heiz- und/oder Kühlmedium führendes Rohrelement (16) angeordnet ist,
**dadurch gekennzeichnet,**
**dass** mindestens eine Verlegeplatte (10ₙ) und mindestens ein Rohrelement (16) eine vorgefertigte, insbesondere flexible und verlegefertige sowie bevorzugterweise im Nichtgebrauchszustand zu einer Verkaufs- und Transportrolle zusammenlegbare Einheit bilden.

2. Rohrleitungs- und Verlegesystem (100) nach Anspruch 1,
**dadurch gekennzeichnet,**
**dass** die mindestens eine Verlegeplatte (10ₙ) eine erste Schicht (12) mit einem auf der ersten Schicht (12) angeordneten Trägermaterial (14) aufweist und das mindestens ein Rohrelement (16) auf dem Trägermaterial (14) befestigt ist.

3. Rohrleitungs- und Verlegesystem (100) nach Anspruch 1,
**dadurch gekennzeichnet,**
**dass** mindestens eine erste und eine zweite Verlegeplatte (10ₐ und 10_{b}) zu einer Verlegebahn (18ₙ) miteinander verbindbar sind bzw. über einen flexiblen Steg (60) miteinander verbunden sind.

4. Rohrleitungs- und Verlegesystem (100) nach einem der vorhergehenden Ansprüche,
**dadurch gekennzeichnet,**
**dass** die Verlegeplatten (10ₙ) zu der Verlegebahn (18ₙ) mittels mindestens eines ersten Verbindungselementes (20) miteinander verbindbar sind.

5. Rohrleitungs- und Verlegesystem (100) nach einem der vorhergehenden Ansprüche,
**dadurch gekennzeichnet,**
**dass** die erste Schicht (12), das Trägermaterial (14) und die Rohrelemente (16) aus flexiblen Materialien bestehen.

6. Rohrleitungs- und Verlegesystem (100) nach einem der vorhergehenden Ansprüche,
**dadurch gekennzeichnet,**
**dass** das mindestens eine erste Verbindungselement (20) ein flexibler Steg ist.

7. Rohrleitungs- und Verlegesystem (100) nach einem der vorhergehenden Ansprüche,
**dadurch gekennzeichnet,**
**dass** die mindestens eine Verlegeplatte (10ₙ) oder die mindestens eine Verlegebahn (18ₙ) zusammenrollbar sind.

8. Rohrleitungs- und Verlegesystem (100) nach einem der vorhergehenden Ansprüche,
**dadurch gekennzeichnet,**
**dass** die mindestens eine Verlegeplatte (10ₙ) oder die mindestens eine Verlegebahn (18ₙ) zusammenklappbar beziehungsweise zusammenlegbar ist.

9. Rohrleitungs- und Verlegesystem (100) nach Anspruch 1,
**dadurch gekennzeichnet,**
**dass** die erste Schicht (12) eine Dämmschicht ist.

10. Rohrleitungs- und Verlegesystem (100) nach Anspruch 6,
**dadurch gekennzeichnet,**
**dass** die Dämmschicht aus aufgeschäumtem Kunststoff besteht.

11. Rohrleitungs- und Verlegesystem (100) nach Anspruch 1,
**dadurch gekennzeichnet,**
**dass** das Trägermaterial (14) eine Kunststofffolie ist.

12. Rohrleitungs- und Verlegesystem (100) nach Anspruch 1,
**dadurch gekennzeichnet,**
**dass** die Rohrelemente (16) aus Kunststoff bestehen.

13. Rohrleitungs- und Verlegesystem (100) nach einem der vorhergehenden Ansprüche,
**dadurch gekennzeichnet,**
**dass** eine Befestigungsart (26) zwischen Rohrelement (16) mit dem Trägermaterial (14) eine Verklebung (26A) ist.

14. Rohrleitungs- und Verlegesystem (100) nach einem der vorhergehenden Ansprüche,
**dadurch gekennzeichnet,**
**dass** die eine Befestigungsart (26) zwischen Rohrelement (16) mit dem Trägermaterial (14) eine Verschweißung (26B) ist.

15. Rohrleitungs- und Verlegesystem (100) nach einem der vorhergehenden Ansprüche,
**dadurch gekennzeichnet,**
**dass** die Befestigungsart (26) zwischen Rohrelement (16) mit dem Trägermaterial (14) oder zwischen dem Rohrelement (16) der ersten Schicht (12) und dem Trägermaterial (14) eine mechanische Befestigung (26C) ist.

16. Rohrleitungs- und Verlegesystem (100) nach einem der vorhergehenden Ansprüche,
**dadurch gekennzeichnet,**
**dass** die mindestens eine Verlegeplatte (10ₙ) oder die mindestens eine Verlegebahn (18ₙ) über zweite Verbindungselemente (24) miteinander verbindbar sind.

17. Rohrleitungs- und Verlegesystem (100) nach Anspruch 13,
**dadurch gekennzeichnet,**
**dass** die zweiten Verbindungselemente (24) Kupplungen und/oder Steckverbindungen oder dergleichen sind.

18. Verfahren zur Auslegung und Herstellung eines Flächenheizund/oder Kühlsystems, insbesondere für eine Warmwasser-Fußbodenheizung, mittels eines Rohrleitungs- und Verlegesystems (100), mit den Merkmalen der Ansprüche 1 bis 17,
**gekennzeichnet dadurch,**
**dass**
a) eine Angabenerfassung (AE) von Daten (D) erfolgt, die für eine Wärmebedarfsberechung (WB) eines bestimmten Raumes (R) mit einer bestimmten Fläche und einem bestimmtem Volumen benötigt werden;
b) eine Übertragung (Ü) der Ergebnisse (E) der Wärmebedarfsberechnung (WB) zur Auslegung des Rohrleitungs- und Verlegesystems (100) vorgenommen wird;
c) eine Aufteilung (AT) der errechneten benötigten Heizfläche (HF_{b}) unter Berücksichtung der Daten (D) des Raumes (R) auf die Größe oder Anzahl der mindestens einen Verlegeplatte (10ₙ) oder mindestens einen Verlegebahn (18ₙ) vorgenommen wird;
d) eine Anfertigung (AF) der mindestens einen Verlegeplatte (10ₙ) und/oder mindestens einen Verlegebahn (18ₙ) entsprechend der Aufteilung (AT) erfolgt;
e) eine Verpackung (VP) und Kennzeichnung einschließlich Montageanleitung, bestehend aus variablen spezifischen und fixer Informationen, unter vorherigem Aufrollen und/oder Zusammenklappen und/oder Zusammenlegen der mindestens einen Verlegeplatte (10ₙ) und/oder mindestens einen Verlegebahn (18ₙ) erfolgt;
f) eine Versendung (VS) und Abholung (AH) der mindestens einen Verlegeplatte (10ₙ) oder mindestens einen Verlegebahn (18ₙ) erfolgt und
g) eine Verlegung (VL) der mindestens einen Verlegeplatte (10ₙ) oder mindestens einen Verlegebahn (18ₙ) durchgeführt wird.

19. Verfahren nach Anspruch 17,
**dadurch gekennzeichnet,**
**dass** die Angabenerfassung (AE) und Wärmebedarfsberechnung (WB) mit einem rechnergestützten System (RS) ausgeführt wird.

20. Verfahren nach Anspruch 18,
**dadurch gekennzeichnet,**
**dass** die zur Wärmebedarfsberechnung (WB) fixen Daten (D_{f}) im rechnergestützten System abgelegt werden und die variablen Daten (Dᵥ) durch die Angabenerfassung (AE) ermittelt werden.

21. Verlegeplatten (10ₙ),
**gekennzeichnet durch**
einen Aufbau gemäß den Ansprüchen 1, 4, 7 und 8 bis 14.

22. Verlegebahnen (18ₙ),
**gekennzeichnet durch**
einen Aufbau gemäß den Ansprüchen 1 bis 17.
